# EUROPÄISCHE PATENTSCHRIFT

(11) **EP 1 295 763 B1**
(45) Veröffentlichungstag und Bekanntmachung des Hinweises auf die Patenterteilung: **20.04.2005**
(21) Anmeldenummer: 02020734.6
(22) Anmeldetag: 14.09.2002
(51) Int. Cl.: B60R 21/34

(54) **Kraftfahrzeug**
Motor vehicle
Véhicule automobile

(30) Priorität: 21.09.2001 DE 10146564
(43) Veröffentlichungstag der Anmeldung: 26.03.2003
(73) Patentinhaber: Bayerische Motoren Werke Aktiengesellschaft, 80809 München (DE)
(72) Erfinder: Maier, Karlheinz, 81669 München (DE); Juling, Ullrich, 83209 Prien (DE)

(56) Entgegenhaltungen:
- EP-A- 0 967 128
- DE-A- 2 814 107
- DE-A- 10 102 597
- DE-A- 19 712 961

## Beschreibung

Die Erfindung betrifft ein Kraftfahrzeug gemäß dem Oberbegriff des Anspruchs 1.

Aus der gattungsbildenden DE-OS 2814107 ist bereits eine Sicherheitseinrichtung bei einem Kraftfahrzeug zum Schutz von Fußgängern bekannt, bei der eine Abdeckung oder Haube eines vorderen Abschnittes des Kraftfahrzeuges bei einer Kollision mit einem Hindernis durch einen Airbag oder dergleichen angehoben wird.

Aus der DE 19712961 ist bereits eine Anlenkung einer Frontklappe vor einer Windschutzscheibe eines Fahrzeug bekannt, bei der eine Frontklappen-Verlagerung an der Anlenkungsstelle nach oben möglich ist.

Aufgabe der Erfindung ist es, ein Kraftfahrzeug mit einer Sicherheitseinrichtung auszubilden, die einen einfachen Aufbau aufweist.

Diese Aufgabe wird durch die Merkmale des Anspruchs 1 gelöst.

Bei einem mit der erfindungsgemäßen Sicherheitseinrichtung ausgestatteten Kraftfahrzeug wird vorteilhafterweise die Haube über eine durch das Aktivieren eines Gasgenerators betätigte Entriegelungsvorrichtung aus einer Befestigung mit der Karosserie vor einer Befüllung des Airbags gelöst.

In einer vorteilhaften Ausführungsform folgt die Entriegelung der Haube mechanisch über eine Vorrichtung mit einem Bowdenzug. Der einfache Aufbau dieser Entriegelungsvorrichtung gewährleistet eine sichere Entriegelung bei einem Aufprall.

Die Haube kann vorteilhafterweise mit oder ohne den Scharnieren, über die die Haube an der Karosserie befestigt ist, bei einer Airbagauslösung von der Karosserie gelöst werden.

In einer vorteilhaften Ausführungsform wird die Hubbewegung der Haube durch entsprechende Führungen und Anschläge geleitet und begrenzt. Die Bewegungsrichtung der Haube kann dabei entweder vertikal oder in bezug auf die Fahrtrichtung oder Fahrzeuglängsrichtung x schräg nach hinten weisen, d.h. mit einem horizontalen Weganteil in x-Richtung.

Vorteilhafterweise kann ein entgegengesetzt zur Fahrtrichtung x gerichteter Verschiebeweg der Haube dazu benutzt werden, dass die Haube über mindestens eine entsprechende Führung auch im vorderen Bereich der Haube angehoben wird, um dadurch einen weiteren Verformungsraum zu schaffen. Der zur Fahrtrichtung x rückwärts gerichtete Anteil der Öffnungsbewegung der Haube erhöht die Schutzwirkung der erfindungsgemäßen Sicherheitseinrichtung, da sich die Haube von einem auf die Haube auftreffenden Körper wegbewegt und somit der Geschwindigkeitsunterschied zwischen dem auftreffenden Körper und der Haube verringert wird.

In einer vorteilhaften Ausführungsform wird nach einer Zündung einer Gaspatrone das aus einem Hybrid- oder Kaltgasgenerator ausströmende Gas zuerst dazu benutzt, um die starre Verbindung der Haube zur Karosserie zu lösen. Erst nach der mechanischen Entriegelung der Haube kann das Gas aus dem Gasgenerator zu dem schlauchförmigen Airbag strömen. Durch diese Konstruktion wird sichergestellt, dass sich die Hubkraft zum Anheben der Haube erst dann entwickeln kann, wenn die starre Verbindung der Haube zur Karosserie entsperrt ist und somit ein definierter Öffnungsvorgang möglich ist.

Bei der erfindungsgemäßen Sicherheitseinrichtung leitet vorteilhafterweise der sich füllende schlauchförmige Airbag seine Hubkraft großflächig in die Haube ein, so dass eine Beschädigungsgefahr der Haubenstruktur durch die Belastung bei der Bewegung der Haube verringert ist. Dadurch kann bei einer Fehlauslösung der erfindungsgemäßen Sicherheitseinrichtung eine Beschädigung der Haube vermieden werden. Darüber hinaus wirkt der Airbag bei einem Aufprall eines Körpers auf die Haube großflächig unterstützend auf die Haubenstruktur und nimmt selbst Aufprallenergie auf.

Die Öffnungsgeschwindigkeit und der Aufprallwiderstand des Airbags sind bei der erfindungsgemäßen Sicherheitseinrichtung durch entsprechende Einrichtungen, wie Ausströmquerschnitte und Füllmengen und Ventilöffnungen, einstellbar. In einer vorteilhaften Ausführungsform der erfindungsgemäßen Sicherheitseinrichtung kann der Airbag nach einer Auslösung beispielsweise automatisch belüftet werden, so dass die Haube wieder abgesenkt werden kann.

Eine Ausführungsform der Erfindung wird nachstehend anhand der Zeichnungen beispielshalber beschrieben. Dabei zeigen:
- Figur 1: eine perspektivische Ansicht einer in einem Fahrzeug unterhalb einer Haube angeordneten Sicherheitseinrichtung,
- Figur 2: eine vergrößerte Darstellung der in der Figur 1 gezeigten Anbindung der Haube an einer nichtdargestellten Fahrzeugkarosserie und
- Figur 3: eine teilweise geschnittene, perspektivische Ansicht einer vergrößerten Darstellung eines in der Figur 1 gezeigten Gasgeneratorgehäuses mit den daran angeschlossenen Gasdruckleitungen und Entriegelungszügen.

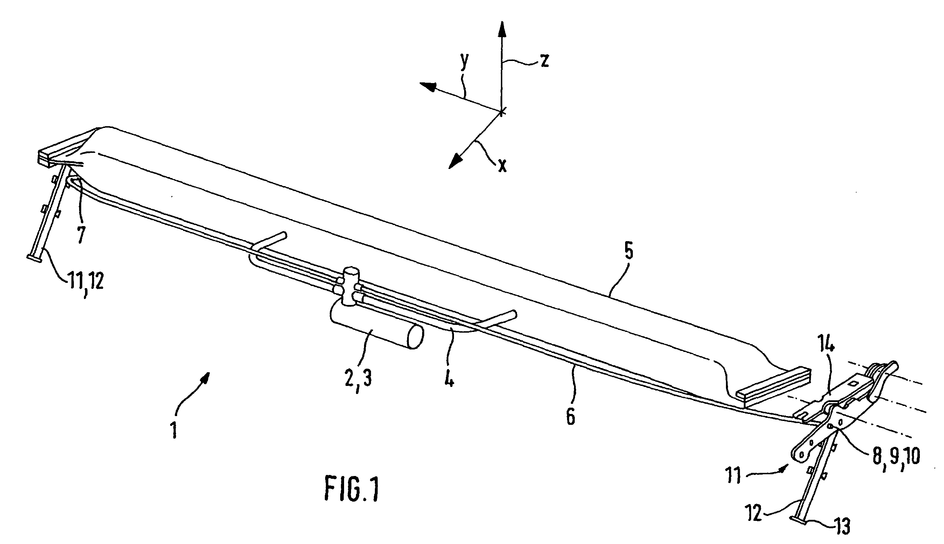

Die Figur 1 zeigt ein Fußgängerschutzsystem oder eine Sicherheitseinrichtung 1, die in einem nicht dargestellten Fahrzeug unterhalb einer Haube vor einer Windschutzscheibe angeordnet ist. Die Sicherheitseinrichtung 1 weist einen Gasgenerator 2, beispielsweise einen Hybrid- oder Kaltgasgenerator, auf. An ein Gehäuse 3 des Gasgenerators 2 sind Druckgasleitungen 4 angeschlossen, die zu einem schlauchförmigen Luftsack oder Airbag 5 führen.

Ferner steht ein Entriegelungszug oder Bowdenzug 6 in Wirkverbindung mit dem Gasgenerator 2. Die beiden gegenüberliegenden Enden 7, 8 des Bowdenzuges 6 sind jeweils mit einem Verriegelungsbolzen oder Sperrstift 9 verbunden. Die Sperrstifte 9 greifen in jeweils eine Öffnung 10 einer Lagerung 11 der nichtdargestellten Abdeckung oder Haube eines Vorderbaus eines Kraftfahrzeuges ein. In der gezeigten Ausführungsform der Figur 1 erstreckt sich der Airbag 5 unterhalb eines hinteren Endes der Haube vor einer Windschutzscheibe in Fahrzeugquerrichtung y.

In der Figur 1 ist ferner an den beiden Haubenlagerungen 11 jeweils eine Linearführung 12 mit jeweils einem Anschlag 13 zur Begrenzung der Hubbewegung in z-Richtung nach oben dargestellt. In der gezeigten Ausführungsform erstreckt sich der Airbag 5 zwischen den beiden Lagerungen 11.

Der in der Figur 1 abgebildete Luftsack 5 weist einen im wesentlichen kreisförmigen oder ovalen Querschnitt auf. In einer anderen Ausführungsform kann der Airbag einen keilförmigen Querschnitt aufweisen, so dass bei einem Crash am hinteren Ende des Airbags 5, dass heißt entgegengesetzt zur Fahrtrichtung x, eine stärkere Anhebung eines hinteren Endes der Haube in z-Richtung erfolgt.

In einer weiteren Ausführungsform kann der Airbag 5 zusätzlich seitlich links und rechts auf einem Stützträger einer Fahrzeugseitenwand liegen. Der Airbag weist dann in der Draufsicht eine U-Form auf.

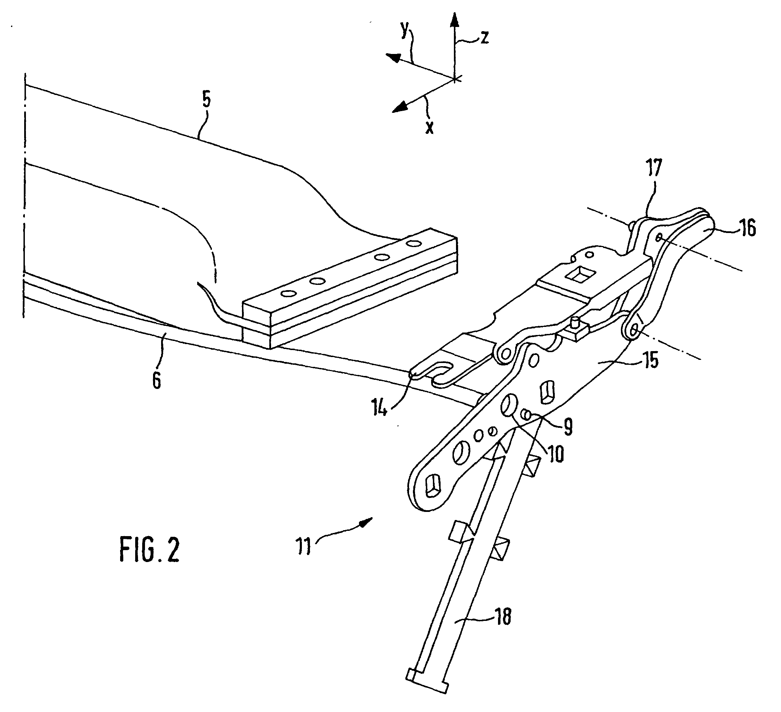

Die Figur 2 zeigt in einer vergrößerten Darstellung die Lagerung 11 der nichtdargestellten Haube. Ein in etwa waagerecht angeordnetes Tragelement 14 befindet sich an der Oberseite der Lagerung 11. An diesem Tragelement 14 ist das zu einer Windschutzscheibe zeigende hintere Ende der Haube befestigt. Das Tragelement 14 ist verschwenkbar an einem Haubenscharnierteil 15 angeordnet. Das Haubenscharnierteil 15 ist an weiteren Schwenkarmen 16, 17 angelenkt, die an einem Karosserieteil des Kraftfahrzeuges, beispielsweise einer Fahrzeugseitenwand, gelagert sind.

Aus der Figur 2 geht ferner die Lage eines Sperrstiftes 9 hervor, der in der Öffnung 10 des Haubenscharnierteils 10 über den Bowdenzug 6 herausziehbar gehaltert ist.

An dem Haubenscharnierteil 15 ist ferner ein Fangarm 18 angelenkt, der die Funktion einer Linearführung mit Anschlag und Verriegelung hat.

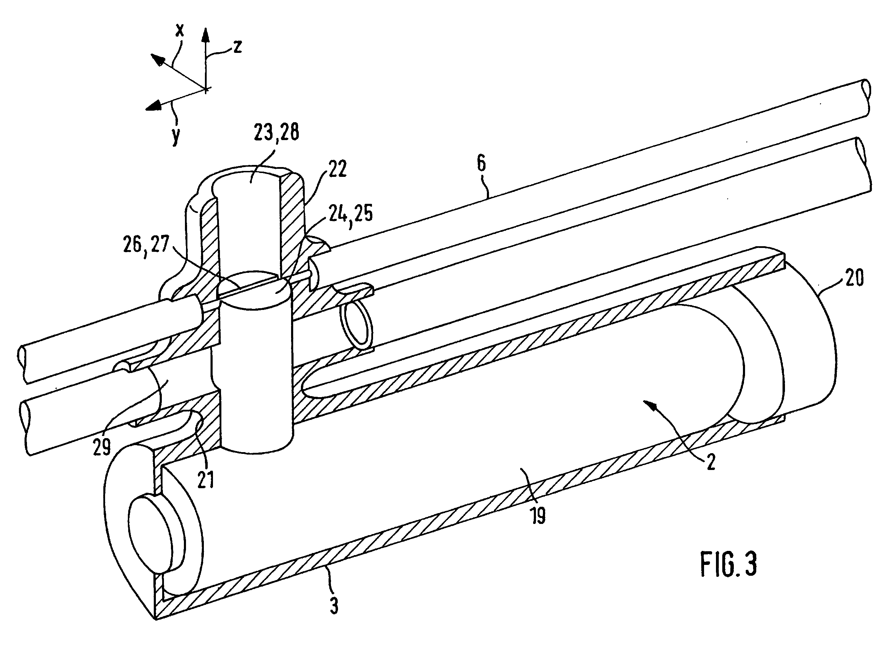

Die Figur 3 zeigt eine Schnittdarstellung des Gehäuses 3 des Gasgenerators 2. In dem Gehäuse 3 ist eine Patrone 19 angeordnet, die mit einem Gas gefüllt ist. Das zylindrische Gehäuse 3 ist mit einem Deckel 20 verschlossen. An einem oberen Abschnitt 21 des Gehäuses 3 ist ein Anschlussteil 22 mit einer zylindrischen Bohrung 23 vorgesehen. In der zylindrischen Bohrung 23 ist ein verschiebbarer Kolben 24 angeordnet, an dessen Oberseite 25 eine Nut 26 zur Aufnahme eines Seils 27 des Bowdenzuges 6 vorgesehen ist.

Das aus dem Gasgenerator 2 austretende Gas strömt in die zylindrische Bohrung 23 und bewegt dadurch den Kolben 24 in Richtung einer Öffnung 28 der Bohrung 23. Die Bewegung des Kolbens 24 wird im wesentlichen dadurch gestoppt, dass der Kolben 24 Austrittsöffnungen 29, 30 freigibt, durch die das Gas des Gasgenerators 2 in den Airbag 5 strömen kann.

Durch die Verschiebung des Kolbens 24 in z-Richtung wird das Seil 27 des Bowdenzuges 6 ebenfalls nach oben mitgenommen, so dass die gegenüberliegenden Enden 7, 8 des Seiles 27 sich horizontal in Fahrzeugquerrichtung y verschieben und dadurch die Sperrstifte 9 aus den entsprechenden Öffnungen 10 in den Haubenscharnierteilen 15 herausgezogen werden. Durch die Entriegelung über die Sperrstifte 9 wird die starre Verbindung der Haube zur Karosserie des Kraftfahrzeuges gelöst. Diese Zwangskopplung stellt sicher, dass das Füllen des Airbags 5 erst dann stattfindet, wenn die Verbindung der Haube zur Kraftfahrzeugkarosserie gelöst ist, so dass ein definierter Öffnungsvorgang möglich ist.

## Patentansprüche

1. Kraftfahrzeug mit einer Sicherheitseinrichtung (1) zum Schutz von Fußgängern, mit einer Haube, die einen vorderen Teil eines Kraftfahrzeuges abdeckt, mit mindestens einem unter der Haube angeordneten Airbag (5), mit mindestens einem Gasgenerator (2) und den dazugehörigen Druckleitungen (4), mit einer Lagerung (11) eines hinteren Endes der Haube vor einer Windschutzscheibe zum Verschwenken der Haube, mit einer Fangvorrichtung, die den Verstellweg der Haube bei einer Hubbewegung des Airbags begrenzt, mit mindestens einer Sensorvorrichtung zur Erfassung einer Kollision eines vorderen Bereiches des Kraftfahrzeuges mit einem Hindernis, **dadurch gekennzeichnet, dass** eine Vorrichtung zur mechanischen Entriegelung einer Verbindung (11) der Haube mit der Fahrzeugkarosserie unterhalb der Haube vorgesehen ist und dass die Entriegelung durch das Aktivieren des jeweiligen Gasgenerators (2) vor einem Befüllen der vorhandenen Anzahl an Airbags (5) mit Gas erfolgt.

2. Kraftfahrzeug nach Anspruch 1, **dadurch gekennzeichnet, dass** die Vorrichtung zur Entriegelung aus einem in Fahrzeugquerrichtung y verlaufenden Bowdenzug (6) besteht, der in mechanischer Verbindung mit einem Gasgenerator (2) steht.

3. Kraftfahrzeug nach den Ansprüchen 1 oder 2, **dadurch gekennzeichnet, dass** an den gegenüberliegenden Enden (7, 8) des Bowdenzuges (6) jeweils ein Verriegelungsbolzen oder dergleichen (9) angeordnet ist, der aus einer Verriegelungsstellung mit der Haubenlagerung bewegbar sind, so dass die Verbindung der Haube mit der Kraftfahrzeugkarosserie lösbar ist.

4. Kraftfahrzeug nach einem der vorgehenden Ansprüche, **dadurch gekennzeichnet, dass** an einem Gehäuse (3) des Gasgenerators (2) ein Anschlussteil (22) mit einer zylindrischen Bohrung (23) angeordnet ist, in dem ein Kolben (24) verschiebbar geführt ist, dass an dem Kolben (24) eine Befestigungsvorrichtung (26) vorgesehen ist, durch die der Bowdenzug (6, 27) gehaltert ist.

5. Kraftfahrzeug nach einem der vorgehenden Ansprüche, **dadurch gekennzeichnet, dass** eine Verkürzung der wirksamen Länge des Bowdenzuges (6) durch eine Verschiebung des Kolbens (24) in der zylindrischen Bohrung (23) erfolgt, wenn ein aus dem aktivierten Gasgenerator (2) ausströmendes Gas den Kolben (24) in eine Position verschiebt, in der die Entriegelung der Haube von der Kraftfahrzeugkarosserie stattfindet und dass danach das Gas über Mittel (29, 30, 4) zum jeweiligen Airbag (5) strömt.

6. Kraftfahrzeug nach einem der vorgehenden Ansprüche, **dadurch gekennzeichnet, dass** die Mittel (29, 30, 4) aus mindestens einer Austrittsöffnung (29, 30) bestehen, die in dem Anschlussteil (22) vorgesehen sind, dass an der jeweiligen Austrittsöffnung (29, 30) jeweils eine Druckgasleitung (4) angeschlossen ist und dass die jeweilige Austrittsöffnung (29, 30) durch den Kolben (24) solange bei einem aktivierten Gasgenerator (2) verschlossen ist, bis die Entriegelung der Haube von der Kraftfahrzeugkarosserie stattgefunden hat.

7. Kraftfahrzeug nach einem der vorgehenden Ansprüche, **dadurch gekennzeichnet, dass** die Hubbewegung der Haube durch die entsprechende Anzahl an Airbags (5) nur eine vertikale Komponente z oder eine vertikale Komponente z und zusätzlich eine horizontale Komponente entgegengesetzt zur Fahrtrichtung in Fahrzeuglängsrichtung x aufweist.

8. Kraftfahrzeug nach einem der vorhergehenden Ansprüche, **dadurch gekennzeichnet, dass** die horizontale Komponente entgegengesetzt zur Fahrtrichtung in Fahrzeuglängsrichtung x zur Anhebung eines vorderen Bereiches der Haube dient.

9. Kraftfahrzeug nach einem der vorhergehenden Ansprüche, **dadurch gekennzeichnet, dass** eine Anhebung des vorderen Bereiches der Haube über eine Kulissenführung erfolgt, die gleichzeitig den Weg der Hubbewegung der Haube begrenzt.

10. Kraftfahrzeug nach einen der vorhergehenden Ansprüche, **dadurch gekennzeichnet, dass** sich die entsprechende Anzahl von Airbags (5) in Fahrzeugquerrichtung y annähernd über die gesamte Haubenbreite erstreckt.

11. Kraftfahrzeug nach einem der vorhergehenden Ansprüche, **dadurch gekennzeichnet, dass** unterhalb der Haube in Fahrzeuglängsrichtung x verlaufende, seitliche Airbags (5) zusätzlich oder alternativ zu den in Fahrzeugquerrichtung y angeordneten Airbags (5) vorgesehen sind.

12. Kraftfahrzeug nach einem der vorhergehenden Ansprüche, **dadurch gekennzeichnet, dass** bei einer ausschließlichen Verwendung von seitlichen Airbags (5) zumindest ein Gasgenerator (2) zur Betätigung des Bowdenzuges (6) zwischen der Haubenlagerung (11) angeordnet ist.

13. Kraftfahrzeug nach einem der vorhergehenden Ansprüche, **dadurch gekennzeichnet, dass** die entsprechende Anzahl von Airbags (5), die sich in Fahrzeugquerrichtung y erstrecken einen kreisförmigen oder einen ovalen oder einen keilförmigen Querschnitt aufweisen, wobei bei dem keilförmigen Querschnitt das höhere Ende des Airbags (5) zum hinteren Ende der Haube zeigt.

## Claims

1. A motor vehicle with a protective device (1) for protection of pedestrians, comprising a bonnet covering a front part of a motor vehicle, at least one airbag (5) disposed under the bonnet, at least one gas generator (2) and associated pressure lines (4), a bearing (11) for a rear end of the bonnet in order to pivot the bonnet in front of a windscreen, a catch device which limits the travel of the bonnet during a lifting motion of the airbag, and at least one sensor device for detecting a collision between a front region of the vehicle and an obstacle, **characterised in that** a device for mechanically unlocking a connection (11) between the bonnet and the vehicle body is provided under the bonnet and unlocking is effected by activating the respective gas generator (2) before the available number of airbags (5) are filled with gas.

2. A motor vehicle according to claim 1, **characterised in that** the unlocking device comprises a Bowden cable (6) extending in the transverse direction (y) of the vehicle and mechanically connected to a gas generator (2).

3. A motor vehicle according to claim 1 or 2, **characterised in that** a locking bolt or the like (9) is provided at the opposite ends (7, 8) of the Bowden cable (6) and is movable out of a position in which it is locked to the bonnet bearing, thus breaking the connection between the bonnet and the body.

4. A motor vehicle according to any of the preceding claims, **characterised in that** a connecting part (22) disposed in a casing (3) of the gas generator (2) has a cylindrical bore (23) in which a movable piston (24) is guided, and a fastening device (26) for holding the Bowden cable (6, 27) is provided on the piston (24).

5. A motor vehicle according to any of the preceding claims, **characterised in that** the effective length of the Bowden cable (6) is shortened by a displacement of the piston (24) in the cylindrical bore (23) when gas flowing out of the activated gas generator (2) moves the piston (24) into a position in which the bonnet is unlocked from the vehicle body, after which the gas flows to the respective airbag (5) via means (29, 30, 4).

6. A motor vehicle according to any of the preceding claims, **characterised in that** the means (29, 30, 4) comprise at least one outlet opening (29, 30) provided in the connecting part (22), a compressed-gas pipe (4) is connected to each outlet opening (29, 30) and when a gas generator (2) is activated, the respective outlet opening (29, 30) is closed by the piston (24) until the bonnet has been released from the vehicle body.

7. A motor vehicle according to any of the preceding claims, **characterised in that** the number of airbags (5) is such that the lifting motion of the bonnet has a vertical component (z) alone or a vertical component (z) and an additional horizontal component opposite the direction of travel in the longitudinal direction (x) of the vehicle.

8. A motor vehicle according to any of the preceding claims, **characterised in that** the horizontal component opposite the direction of travel in the longitudinal direction (x) of the vehicle is used for raising a front region of the bonnet.

9. A motor vehicle according to any of the preceding claims, **characterised in that** the front region of the bonnet is lifted via a slotted guide which also limits the distance travelled by the bonnet when lifted.

10. A motor vehicle according to any of the preceding claims, **characterised in that** the appropriate number of airbags (5) in the transverse direction (y) of the vehicle extends approximately over the entire width of the bonnet.

11. A motor vehicle according to any of the preceding claims, **characterised in that** lateral airbags (5) extending under the hood in the longitudinal direction (x) of the vehicle are provided in addition or alternatively to the airbags (5) disposed in the transverse direction (y).

12. A motor vehicle according to any of the preceding claims, **characterised in that** in the event of exclusive use of lateral airbags (5) at least one gas generator (2) is provided for actuating the Bowden cable (6) between the bonnet bearings (11).

13. A motor vehicle according to any of the preceding claims, **characterised in that** the suitable number of airbags (5) extending in the transverse direction (y) have a circular or an oval or a wedge-shaped cross-section, and when the cross-section is wedge-shaped the higher end of the airbag (5) points towards the rear end of the bonnet.

## Revendications

1. Véhicule automobile comprenant un dispositif de sécurité (1) pour la protection de piétons, comprenant un capot qui recouvre une partie avant du véhicule automobile, avec au moins un coussin gonflable (5) disposé sous le capot, au moins un générateur de gaz (2) et les conduites sous pression (4) associées, un coussinet (11) d'une extrémité arrière du capot devant un pare-brise pour faire pivoter le capot, avec un dispositif de sûreté qui limite la course de déplacement du capot lors d'un mouvement de levage du coussin gonflable, au moins un dispositif capteur pour détecter une collision d'une zone avant du véhicule automobile avec un obstacle,
**caractérisé en ce qu'**
un dispositif est prévu sous le capot pour le déverrouillage mécanique d'une liaison (11) entre le capot et la carrosserie de véhicule, et le déverrouillage s'effectue par l'activation du générateur de gaz (2) respectif avant le remplissage du nombre existant de coussins gonflables (5) par le gaz.

2. Véhicule automobile selon la revendication 1,
**caractérisé en ce que**
le dispositif de déverrouillage est un câble Bowden (6) s'étendant dans la direction transversale y du véhicule et relié mécaniquement à un générateur de gaz (2).

3. Véhicule automobile selon les revendications 1 ou 2,
**caractérisé en ce qu'**
un boulon de verrouillage ou similaire (9) est disposé au niveau des extrémités (7, 8) opposées du câble Bowden (6), de manière amovible hors d'une position de verrouillage avec le coussinet de capot, de telle sorte que la liaison entre le capot et la carrosserie de véhicule soit détachable.

4. Véhicule automobile selon l'une quelconque des revendications précédentes,
**caractérisé en ce que**
sur un carter (3) du générateur de gaz (2), est disposé un élément de raccordement (22) avec un alésage cylindrique (23), dans lequel un piston (24) est guidé de façon coulissante, et sur le piston (24) un dispositif de fixation (26) maintient le câble Bowden (6, 27).

5. Véhicule automobile selon l'une quelconque des revendications précédentes,
**caractérisé en ce qu'**
un raccourcissement de la longueur efficace du câble Bowden (6) est réalisé par un déplacement du piston (24) dans l'alésage cylindrique (23), lorsqu'un gaz sortant du générateur de gaz (2) activé déplace le piston (24) dans une position dans laquelle se déverrouille le capot de la carrosserie du véhicule, et ensuite le gaz s'écoule par des moyens (29, 30, 4) vers le coussin gonflable (5) respectif.

6. Véhicule automobile selon l'une quelconque des revendications précédentes,
**caractérisé en ce que**
les moyens (29, 30, 4) comprennent au moins une ouverture de sortie (29, 30) prévue dans l'élément de raccordement (22), une conduite de gaz sous pression (4) est raccordée à l'ouverture de sortie (29, 30) respective, et l'ouverture de sortie (29, 30) respective reste fermée par le piston (24), lorsque le générateur de gaz (2) est activé, jusqu'au déverrouillage du capot de la carrosserie du véhicule.

7. Véhicule automobile selon l'une quelconque des revendications précédentes,
**caractérisé en ce que**
le mouvement de soulèvement du capot par les différents coussins gonflables (5) ne présente qu'une composante verticale (z) ou une composante verticale (z) ainsi qu'une composante horizontale opposée à la direction de roulage dans la direction longitudinale (x) du véhicule.

8. Véhicule automobile selon l'une quelconque des revendications précédentes,
**caractérisé en ce que**
la composante horizontale opposée au sens de roulage dans la direction longitudinale (x) du véhicule sert à soulever une zone avant du capot.

9. Véhicule automobile selon l'une quelconque des revendications précédentes,
**caractérisé en ce qu'**
un soulèvement de la zone avant du capot s'effectue par un guidage à coulisse qui limite en même temps la course du mouvement de soulèvement du capot.

10. Véhicule automobile selon l'une quelconque des revendications précédentes,
**caractérisé** en que
les différents coussins gonflables (5) sont répartis dans la direction transversale (y) du véhicule sensiblement sur toute la largeur de capot.

11. Véhicule automobile selon l'une quelconque des revendications précédentes,
**caractérisé en ce que**
des coussins gonflables (5) latéraux s'étendant sous le capot dans la direction longitudinale x du véhicule sont prévus en plus ou variante des coussins gonflables (5) disposés en direction transversale (y) du véhicule.

12. Véhicule automobile selon l'une quelconque des revendications précédentes,
**caractérisé en ce que**
lors d'une utilisation exclusive de coussins gonflables (5) latéraux, au moins un générateur de gaz (2) est disposé entre les coussinets de capot (11) pour actionner le câble Bowden (6).

13. Véhicule automobile selon l'une quelconque des revendications précédentes,
**caractérisé en ce que**
les différents coussins gonflables (5) s'étendant dans la direction transversale (y) du véhicule présentent une section transversale circulaire ou ovale ou cunéiforme, et pour la section transversale cunéiforme, l'extrémité la plus haute du coussin gonflable (5) est dirigée vers l'extrémité arrière du capot.
